# DEMANDE DE BREVET EUROPEEN

(11) **EP 1 080 960 A1**
(43) Date de publication de la demande: **07.03.2001**
(21) Numéro de dépôt: 99402151.7
(22) Date de dépôt: 30.08.1999
(51) Int. Cl.: B60J 3/02

(54) **Ensemble-écran convexe à "volets" à angles optiques, anti-phares**

(71) Demandeur: Neacsu, Christian, 87000 Limoges (FR)
(72) Inventeur: Neacsu, Christian, 87000 Limoges (FR)

(57) **Abrégé**

L'ensemble-écran convexe à "volets" à angles optiques (anti-phares et lumière naturelle).

Cette invention destinée à améliorer nettement la visibilité et protéger la vue tout en évitant les lumières des phares des véhicules ou autres venant en sens inverse notamment la nuit, et le jour de la lumière des rayons horizontaux du soleil.

L'invention est un ensemble-écran convexe à "volets" à angles optiques(1) constitué d'un écran demi-opaque et convexe(3)formé de "fenêtres" et"volets"(5)orientés sur certains angles optiques(7)différents les uns des autres.

L'alternance des "fenêtres"(4) et "volets"(5)orientés sur des angles prècis(7)doublés par la convexité et la demi-opacité de l'écran, permettent la protection de la vue et une meilleure visibilité du conducteur-pilote.

Cette invention a pour but de faciliter la conduite ou pilotage de nuit principalement lors de croisement des phares et deviendra l'instrument efficace et indispensable sur la trajéctoire choisie, rail, air etc.

## Description

La présente invention concerne un ensemble-écran convexe à "volets" à angles optiques anti-phares.

Les troubles de la vue sont souvent causés par les lumières aveuglantes des phares ou des rayons horizontaux du soleil et reste encore un problème d'actualité pour les conduites automobiles, convois ferroviaires, chemin de fer urbain, chemin de fer métropolitain, autocars, navigation aèrienne.

Diverses solutions ont été présentées ces dernières années, cependant dans la pratique elles n'ont pu résoudre cet inconvénient majeur, soit de par la complexité technique, soit de par le coùt trop élevé.

Le produit ici présenté apporte par sa simplicité et son résultat technique nouveau, la solution au problème mentionné ci-dessus.

Cette présente invention qu'est l'ensemble-écran convexe et demi-opaque à "volets" à angles optiques, permet à la fois de protéger la vue et d'augmenter la visibilité du conducteur, pilote etc face à la lumière des phares arrivant en sens inverse ainsi que le soleil et etc.

Cet ensemble-écran convexe améliore efficacement la conduite et protège la vue de tous les conducteurs ou pilotes et permet ainsi d'éviter les phares de tous les véhicules ou autres la nuit, le jour le soleil et etc, voire jusqu'à éviter des accidents et ce, de par ce "filtre" optique.

L'ensemble-écran se caractérise par un cadre convexe où est inséré un écran demi-opaque et convexe, supportant des "fenêtres" et des "volets" orientés sur certains angles optiques différents les uns des autres et croissant de gauche à droite.

L'ensemble-écran convexe est fixé au pare-soleil existant dans tous véhicules de tourisme, transport ferroviaire, urbain, métropolitain, aérien, et ce par un système d'accrochage réglable et mobile, le positionnement de l'ensemble-écran peut également se règler en fonction de la taille du conducteur ou pilote ainsi que des dimensions de l'habitacle des véhicules ou avions.

La structure de l'ensemble-écran convexe est constituée par l'alternance des "fenêtres" et des "volets" orientés sur des angles optiques précis calculés et obtenus par la découpe du matériau qui constitue cet écran.

L'alternance des "fenêtres" et des "volets" de l'ensemble-écran convexe permet d'une part, la protection de la vue contre les lumières aveuglantes (naturelles ou artificielles) donc une meilleure vue pour pour le conducteur ou pilote.

Le fonctionnement et le principe de base de cette invention ont trois caractéristiques spécifiques et complémentaires, soit,
- l'alternance des "fenêtres" et des "volets" orientés en angles optiques dans un cadre convexe où est inséré un écran de même matériau.
- une demi-opacité dégressive sur l'horizontale de l'écran donc de ses "volets".
- la convexité de l'écran.
La complémentarité de ces trois principes apporte un excellent et nouveau résultat technique.

Ainsi la demi-opacité de l'ensemble-écran convexe à l'horizontale et de droite à gauche, doublé par l'alternance du système des "fenêtres" et des"volets" en angles différents mais cependant précis, puis la disposition convexe de l'écran apporte à la fois une protection face aux lumières tant artificielles que naturelles (phares etc) à l'inverse du conducteur ou pilote ainsi qu'une excellente visibilité sur route, réseau ferroviaire, urbain, métropolitain, autocars etc et tout particulièrement la nuit.

Cette invention aura sa place dans tout habitacle à hauteur du champ visuel des conducteurs ou pliotes à demi-déplacée vers la gauche du pare-brise, et ce, dans le but d'obtenir un maximum de résultat.

Les dimensions de l'ensemble-écran convexe à "volets" orientés en angles optiques, sont évidemment variables mais équivalents sensiblement d'un rétroviseur suivant le véhicule automobile, ferroviaire, urbain, métropolitain, navigation aérienne et n'est pas un objet encombrant. Les "fenêtres" et les "volets" de cette invention seront réalisés en matière plastique malléable, légère, ignifugée, et forment à eux seuls l'écran.

Les dessins annexés illustrent l'envention,

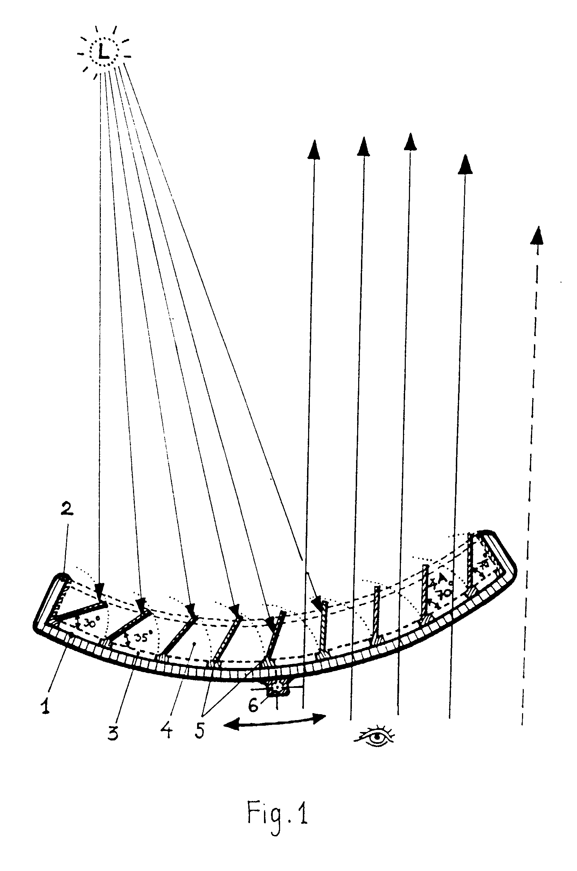

- Fig. 1 représente une vue schématique de l'action de l'ensemble-écran convexe(1) sur les rayons de la lumière(L), les volets(5) particulièrement ceux de gauche arrêtent les rayons lumineux et permettent dans le même temps la visibilité (particulièrement ceux de droite). Le résultat est aug-.enté par l'opacité dégressive (de gauche à droite) et par la convexité qui focalise l'action protectrice des "volets"(5) en petits angles particulièrement à gauche et optimisé l'ouverture des "volets"(5) et des "fenêtres"(4), sur un grand angle particulièrement à droite pour voir la route.

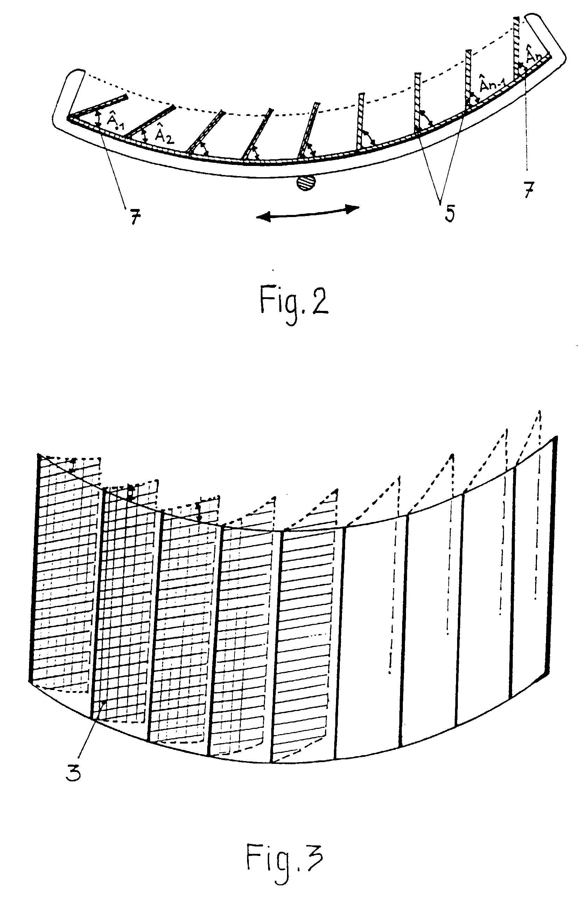

- Fig.2 représente la disposition des angles(7) des "volets"(5), disposition montrant le rapport angulaire, les angles(7) de gauche avec l'ouverture minimum et des valeurs de 30° - 40°, des angles grandissent vers la droite, arrivant à des valeurs de 45) - 75° (maxi), selon la formule An An-1 ... A2 A1, ou AN = 75° (maximum) et A1 = 30°maximum. Cette disposition angulaire a pour but de créer à la fois une bonne protection particulièrement par la gauche et une meilleure visibilité particulièrement vers la droite de l'ensemble-écran convexe.
- Fig.3 l'écran(3) proprement dit présente une demi-opacité dégressive sur l'horizontale et de gauche à droite, ce qui permet d'obtenir un meilleur résultat technique finale, vue représentant l'écran(3) avec la demi-opacité dégressive et la découpe de ses volets(5) qui présentent la même demi-opacité dégressive.

L'ouverture des"volets"(5) se fait par une diagonale visuelle en partant de gauche à droite, pour les véhicules ou tout autre moyen de transport ayant la conduite à gauche et à l'inverse la conduite à droite.

Les "volets"(5) peuvent être placés en avant ou derrière l'ensemble-écran convexe mais uniquement pour la protection des conducteurs ou pilotes, les"volets" seront placés seulement en avant, ainsi la partie plate de l'écran sera près du conducteur ou pilote et ne présentera aucun risque.

L'ensemble-écran convexe(1) sera fixé sur le pare-soleil ou autre existant sur l'habitacle, le système d'accrochage(6) sera simple et classique, dispositif utilisé pour le miroir-rétroviseur ou autre en dehors des automobiles, ce système sera réglable mobile, voir démontable.

L'ensemble-écran convexe(1) sera situé devant le conducteur ou pilote dans son champ visuel et quelque peu décalé vers la gauche.

Ainsi, par l'alternance des "fenêtres"(4) et des "volets"(5) orientés sur des angles(7) précis, doublé par la convexité et la demi-opacité de l'écran on obtient à la fois une protection de la vue et une meilleure visualisation de la route pour le conducteur.

A titre d'exemple non limitatif, les dimensions des "volets" peuvent être de largeur 15 - 25mm et de longueur 70 - 100mm. L'arc de courbure sera équivalent pour un angle maximum de 120°. Les dimensions des "fenêtres"(4) seront en consonnance avec les dimensions des "volets"(5) de l'écran(3).

Les composants entrant dans la fabrication de l'ensemble-écran convexe sont des matières malléables, légères, ignifugées (matière plastique) afin d'éviter tous risques d'accident.

Cette invention ensemble-écran convexe à "volets" à angles optiques anti-phares ou (tout aveuglement naturel ou artificiel) est particulièrement recommandé et deviendra utile tant pour les conducteurs ou pilote la nuit, lors de conduite ou pilotage en se croisant et sera la "pièce détachée" efficace et indispensable dans un très proche avenir.

## Revendications

1. L'ensemble-écran convexe à "volets" à angles optiques anti-phares(1) se caractérise par ce cadre convexe(2) sur lequel est intégré un écran convexe(3) composé par alternance de "fenêtres"(4) et de "volets"(5) orientés sur certains angles précis(7) mais différents d'un "volet" à l'autre. Situé dans le champ visuel du conducteur ou pilote, il améliore la vision et protège la vue de ceux-ci des lumières gênantes arrivant à l'inverse(lumières naturelles ou artificielles). L'écran(3) se caractérise aussi par une demi-opacité "horizontale".

2. L'écran(3) selon la revendication 1, caractérise que les "volets"(5) présentent une opacité maximum vers la gauche et une demi-opacité vers la droite.

3. L'ensemble-écran convexe(1) selon revendication 1 en ce qui concerne les angles(7) des"volets"(5) soient différents et grandissent de la gauche vers la droite, selon calculs suivants :
Ân>Ân-1>...Â2>Â1, ou Â1= 30°(maxi) et Ân = 75°(maxi).

4. L'ensemble-écran convexe(1) selon la revendication 1, caractérisée par la convexité (courbure) à l'horizontale.

5. L'ensemble-écran convexe(1) selon la revendication 4, se caractérise de par l'arc de courbure maximum 120° qu'il représente.

6. L'ensemble-écran convexe(1) selon revendication 1, caractérisé du fait qu'il se situe dans le champ visuel du conducteur ou pilote et se trouve fixé au pare-soleil par un système d'accrochage-décrochage(6) mobile, réglable et facile à enlever par toute personne.

7. L'ensemble-écran(1) selon les revendications 1 et 2, se caractérise par le matériau choisi pour sa fabrication, soit en matière plastique, cette matière est malléable, légère, ignifugée ou tout autre matière ayant le contenant décrit ci-avant.
